**Europäisches Patentamt**

**European Patent Office**

**Office européen des brevets**

(19)

(11) Veröffentlichungsnummer : **0 323 495 B1**

(12) **EUROPÄISCHE PATENTSCHRIFT**

(45) Veröffentlichungstag der Patentschrift :
02.12.92 Patentblatt 92/49

(51) Int. Cl.⁵ : **B61K 3/00**

(21) Anmeldenummer : **88905414.4**

(22) Anmeldetag : **21.06.88**

(86) Internationale Anmeldenummer :
**PCT/HU88/00043**

(87) Internationale Veröffentlichungsnummer :
**WO 88/10204 29.12.88 Gazette 88/28**

(54) **KONSTRUKTION ZUR KONTROLLIERTEN SCHMIERUNG WENIGSTENS EINES DER GEGENÜBER EINANDER SICH VERSCHIEBENDEN ELEMENTE DURCH DIE BEWEGUNG EINES DER ELEMENTE.**

(30) Priorität : **23.06.87 HU 284587**

(43) Veröffentlichungstag der Anmeldung :
**12.07.89 Patentblatt 89/28**

(45) Bekanntmachung des Hinweises auf die
Patenterteilung :
**02.12.92 Patentblatt 92/49**

(84) Benannte Vertragsstaaten :
**AT DE FR GB SE**

(56) Entgegenhaltungen :
**AT-B-18 629 3**
**DE-C-80 589 5**
**GB-A-16 6**
**US-A- 1 883 148**
**US-A- 2 028 517**
**US-A-18 004 64**
**US-A-20 987 91**
**US-A-24 891 82**

(73) Patentinhaber : **MAGYAR ALLAMVASUTAK**
**Népköztarsasag utja 73/75**
**H-1062 Budapest (HU)**

(72) Erfinder : **SZABO, Jozsef**
**Dimitrov tér 11**
**H-8300 Tapolca (HU)**
Erfinder : **BALOGH, Arpad**
**Esze Tamás u. 10**
**H-8220 Balatonalmádi (HU)**
Erfinder : **VASARHELYI, Ernö**
**Orvos u. 13**
**H-1016 Budapest (HU)**
Erfinder : **GLATZ, István**
**Kom csy u. 13**
**H-1141 Budapest (HU)**

(74) Vertreter : **Zipse + Habersack**
**Kemnatenstrasse 49**
**W-8000 München 19 (DE)**

**Beschreibung**

Die Erfindung bezieht sich auf eine Vorrichtung zur kontrollierten Schmierung von gegen einander beweglichen Elementen, gemäß dem Oberbesriff des Anspruchs 1. Die erfindungsgemäße Konstruktion kann auf zahlreichen Gebieten der Technik angewendet werden. Die Konstruktion kann angewendet werden, wenn die gegeneinander beweglichen Elemente entlang planarer Flächen oder gekrümmter Flächen miteinander in Berührung stehen. Angesichts des weiten Kreises der Anwendungsmöglichkeiten möchten wir nur beispielsweise erwähnen, daß die den Gegenstand der Erfindung bildende Konstruktion in Zusammenhang mit einer Kranlaufbahn, einer Aufzugsbahn, einer Seilbahn oder Eisenbahn-Fahrbahn verwendet werden kann. Es ist beabsichtigt die Erfindung insbesondere unter Berücksichtigung der Anwendung bei Eisenbahnschienen zu beschreiben.

Die US-A-1 800 464 beschreibt eine Vorrichtung zur kontrollierten Schmierung, die in einer Schmiermittelzuführung ein Ventil aufweist, das über einen Hebel und eine Stange von einem ankommenden Eisenbahnrad betätigt wird. In diesem Fall fließt Schmiermittel aus einem Vorratsbehälter, allein angetrieben durch den hydrostatischen Druck, über das Ventil aus einer Bohrung der Schiene aus. Sobald der Druck des Eisenbahnrads auf das Ende des Hebels ausbleibt, schließt das Ventil langsam wieder.

Die Nachteile einer solchen konstruktiven Lösung liegen auf der Hand:
- Die Schmiermittelmenge, die bei einer Aktivierung des Hebels ausfließt, hängt sehr stark von der momentanen Viskosität des Schmiermittels ab, die in Abhängigkeit von der Außentemperatur sehr starken Schwankungen unterliegen kann;
- damit überhaupt eine ausreichende Menge von Schmiermittel ausfließt, muß der Vorratsbehälter sehr hoch montiert werden, was beispielsweise eigens die Montage eines Mastes erfordert, sofern nicht entsprechende Einrichtungen an der Stelle des Gleises genutzt werden können;
- aufgrund der Schließverzögerung des Ventils fließt das Schmiermittel noch unnötigerweise aus, wenn sich das Rad bereits weit von der Schmierstelle entfernt hat;
- wenn ein Rad genau auf dem Hebel zu stehen kommt, kann sinnloserweise der gesamte Inhalt des Schmiermittelbehälters ausfließen.

Diese Nachteile werden durch eine Schienenschmier-Vorrichtung gemäß US-A- 2 098 791 überwunden. Diese bekannte Vorrichtung enthält eine Pumpe, deren Kolben in der Lauffläche der Schiene .so angeordnet ist, daß ein Eisenbahnrad beim Überrollen der Pumpe den Pumpenkolben, der etwas über die Lauffläche der Schiene emporragt, nach unten preßt. Dadurch wird eine Schmiermittelmenge, die vom Kolbenhub abhängt, über eine Druckleitung an eine Stelle der Schiene geleitet, die mit dem Rad in Berührung kommt. Nach dem Passieren das Rades drückt eine Rückholfeder den Pumpenkolben wieder in seine Ausgangsstellung, wobei auf der Saugseite der Pumpe ein Ventil geöffnet und auf der Druckseite ein Ventil geschlossen wird, so daß die Pumpe beim Zurückkehren des Kolbens in seine Ausgangsstellung mit einer neuen Ladung Schmiermittel aus einem Vorratsbehälter gefüllt wird.

Nachteilig bei dieser Lösung ist jedoch, daß der Kolben bei der Betätigung durch das Rad nicht nur einer vertikalen Kraftkomponente unterliegt, sondern durch das aufprallende Rad auch durch eine starke unerwünschte Horizontalkraft beaufschlagt wird, die dazu führt, daß die Lagerung des Pumpenkolbens mit der Zeit ausgeschlagen wird. Dies hat zur Folge, daß die Dichtungspackung die Pumpe bald nicht mehr wirksam abdichten kann, so daß beim Ansaugen Luft in die Pumpe gelangt. Damit wird die Schmiermittelförderung außer Kraft gesetzt.

Der Erfindung liegt die Aufgabe zugrunde, eine Vorrichtung zur Schmierung, wie sie in US-A-2 098 791 beschrieben ist, dahingehend weiterzubilden, daß eine sichere und dauerhafte Funktion gewährleistet ist.

Diese Aufgabe wird mit einer Vorrichtung gelöst, wie sie im Anspruch 1 beschrieben ist.

Die Schmiermittelpumpe gemäß der vorliegenden Erfindung weist konstruktive Merkmale auf, welche die Nachteile der Schmiermittelpumpe aus US-A-2 098 791 vermeiden. Die Pumpe gemäß der Erfindung weist eine verbesserte Abdichtung des Kolbens auf. Diese Abdichtung erfolgt dadurch, daß in dem Außenmantel des Kolbens eine Ringnut vorhanden ist, die über radiale Bohrungen mit dem inneren Hohlraum des Kolbens verbunden ist. Durch diese Verbindung gelangt beim Fördern des Schmiermittels stets auch Schmiermittel in die Nut des Kolbens, welches den Kolben in dem Pumpenzylinder zuverlässig abdichtet. Außerdem wird der Kolben der Pumpe gemäß einer Weiterbildung der Anmeldung nicht durch das Rad unmittelbar betätigt, sondern die Kraft des Rades wirkt stattdessen auf einen Hebel, dessen Lagerung die unerwünschte horizontale Kraftkomponente durch das auftreffende Rad aufnimmt. Nur die vertikale Kraftkomponente wir über Kontaktflächen auf den Kolben der Pumpe übertragen. Ein Ausschlagen der Kolbenlagerung wird dadurch weitgehend vermieden.

Besondere Vorteile der vorliegenden Erfindung gegenüber der Vorrichtung gemäß US-A- 2 098 791 bestehen darin, daß die Vorrichtung gemäß der Erfindung zuverlässiger ist und eine längere Lebensdauer aufweist. Außerdem wird eine Schwächung des Schienenprofils vermieden, da die Pumpe nicht im Schienenprofil selbst, sondern neben der Schiene angebracht ist. Die Vorrichtung gemäß der Erfindung läßt sich auch leichter montieren, da lediglich eine kleine Bohrung in der Schiene erforderlich ist, in der das Schmiermittel zu dem Rad gefördert wird.

Bei einer vorteilhaften Ausführung der Erfindung sind sowohl das Saugventil, als das Druckventil als Kugelventil ausgestaltet.

Zur Aufnahme des von der Schmierstelle abfallenden oder abtropfenden Schmiermittels dient eine Pfanne.

Die erfindungsgemäße Konstruktion wird anhand einer vorteilhaften Ausführung mit Hilfe der beiliegenden Zeichnungen näher erläutert; es zeigen:

Figur 1 den Schnitt der erfindungsgemäßen Konstruktion,

Figur 2 den Schnitt eines Details.

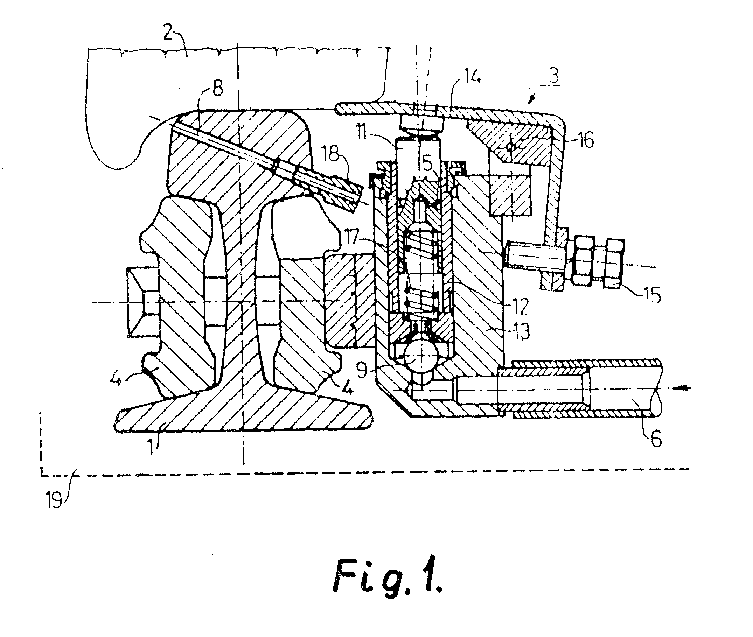

Bei der hier als Beispiel dienenden Konstruktion ist das zu schmieren beabsichtigte Element eine Schiene 1, das sich gegenüber der Schiene verschiebende Element ist ein Rad 2. Figur 1 stellt bloß die Kontur des Rads 2 - mit einer dünneren Linie veranschaulicht - dar. Wie es wohl ersichtlich ist, ist in dem Kopfteil der Schiene 1 eine Bohrung 8 schräg so ausgestaltet, daß deren äußere Mündung auf die gegenüber dem konkaven Bogenabschnitt des Radspurkranzes des Rads liegende Schienenseite entfallt. Bei einer derartigen Anordnung ist es ausgeschlossen, daß das Schmiermittel auf die Lauffläche des Schienenkopfs gelangt und dadurch sowohl die Bremswirkung als auch der Wirkungsgrad des Reibungseingriffs beeinträchtigt werden.

Die Schmiervorrichtung 3 der erfindungsgemäßen Konstruktion ist mit zu der Schiene 1 gehörenden, an sich bekannten Laschen 4 befestigt. Im wesentlichen besteht die vorrichtung 3 aus einem Teil mit Kolben und einem betätigenden Teil. Der Zylinder der vorrichtung ist im Gehäuse 13 ausgestaltet, in welchem zylinder ein Kolben 11 bewegbar montiert ist. Der Kolben 11 ist mit einem Hohlraum ausgebildet und kann sich gegen eine Feder 17 bewegen, die den Kolben 11 im Öffnungssinn belastet. Dem Bodenteil des Hohlraums des Kolbens schliessen sich radiale Bohrungen an, die in eine Ringnut 5 auf dem Mantelteil des Kolbens münden. Das in die Ringnut 5 gelangende Schmiermittel gewährleistet die Schmierung zwischen dem Kolben und dem Zylindermantel. Bei dem hier geschilderten Beispiel wird der Zylinder der vorrichtung durch eine Büchse 12 gebildet, die in dem Hohlraum des Gehäuses 13 befestigt ist.

Die Vorrichtung 3 schließt über eine Saugleitung 6 an einen hier nicht dargestellten Schmiermittelbehälter an, wobei die Saugleitung 6 mit dem Gehäuse 13 verbunden ist. Ein Saugventil 9 befindet sich am Unterteil des Zylinderraums der Vorrichtung 3 und gibt beim Hochbewegen des Kolbens im Öffnungssinn die Schmiermittelzufuhr frei. Durch die Wirkung des Saugeffekts, der bei der Bewegung des Kolbens 11 im Öffnungssinn auftritt, wird das Schmiermittel aus dem Schmiermittelbehälter dem Zylinder der Vorrichtung zugeführt.

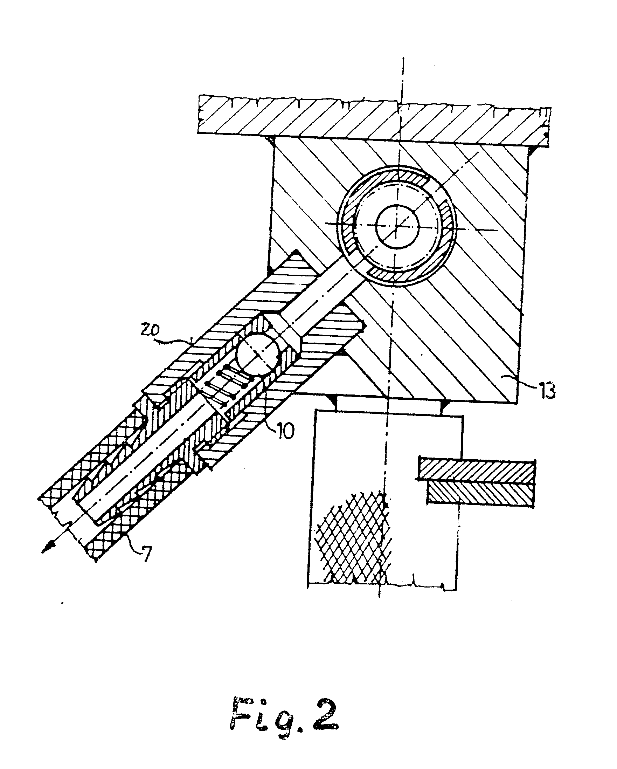

Ein Rohrstutzen 20, der mit einem Druckrohr 7 kommuniziert, ist wie in Figur 2 näher veranschaulicht, an das Gehäuse 13 angeschlossen. Das Druckrohr 7 seinerseits ist an einem Rohrstutzen 18 befestigt, der wiederum in einer das Schmiermittel zu der Schmierstelle leitenden Bohrung 8 befestigt ist. Bei dem hier dargestellten Ausführungsbeispiel ist das Druckventil 10 in dem Rohrstutzen 20 im Gehäuse 13 angeordnet. Es ist - wie es aus der Figur 2 hervorgeht - ebenfalls ein Kugelventil.

Die Menge des mit der Vorrichtung zu der Schmierstelle geleiteten Schmiermittels kann geändert werden. Zu diesem Zweck dient eine Stellschraube 15, die in dem vertikalen Schenkel eines als Winkelhebel 14 ausgestalteten Druckkörpers angeschlossen ist. Wie aus der Figur 1 ersichtlich ist, ist der Winkelhebel um eine Drehachse 16 verkippbar und mit Hilfe der Stellschraube 15 kann das Maß der Kippbewegung geändert werden.

Aus Figur 1 ist auch ersichtlich, daß der horizontale Schenkel des Winkelhebels 14 im Wege des Rads 2 liegt. Wenn das Rad auf den Schenkel aufläuft, erfolgt durch Übermittelung des Winkelhebels 14 der Druckhub des Kolbens 11, was zur folge hat, daß Schmiermittel über die Bohrung 8 zu der Seitenfläche des KOpfes der Schiene geleitet wird.

Bei der hier dargestellten Ausführungsform wurde unterhalb der Schiene 2 eine Pfanne 19, mit einer gestrichelten Linie veranschaulicht. Die Pfanne dient zur Aufnahme des abtropfenden oder abfallenden Schmiermittelüberschusses. Die Pfanne 19 kann mittels der Laschen 4 mit der Schiene verbunden werden, in diesem Fall ist die Pfanne 19 mit der Schiene im wesentlichen parallel, aber es sind zahlreiche Versionen bei der Anordnung der Pfanne 19 möglich.

Die erfindungsgemäße Konstruktion sichert auf eine zuverlässige Weise die Schmierung der gegeneinander sich verschiebenden Elemente, sie ist weder gegenüber ungünstigen Betriebsverhältnissen, noch sonstigen Einwirkungen der Umgebung, z. B. meteorologischen Verhältnissen empfindlich. Die vorgeschlagene Konstruktion beansprucht keine elektrische Energie, da sowohl der Aufbau, als die Funktion mechanisch sind. Weder die Herstellung, noch die Inbetriebhaltung beanspruchen Personen mit speziellen Fachkenntnissen. Infolge des Aufbaus und der niedrigen Zahl der Bestandteile neist die Konstruktion nicht zum Schadhaftwerden und der Anspruch auf Wartung ist minimal.

## Patentansprüche

1. Vorrichtung zur Schmierung von gegeneinander beweglichen Elementen, z.B. einer Schiene (1) und einem Rad (2), mit

   a) einem Pumpenzylinder (12), der einen Kolben (11) mit einer Rückholfeder (17) enthält;

b) einem Saugventil (9) und einem Druckventil (10);

c) einer Saugleitung (6), die mit einem Schmiermittelbehälter verbunden ist;

d) einer Druckleitung (7), die durch eine Bohrung (8) in der Schiene (1) zu der dem Verschleiß am meisten ausgesetzten Fläche führt;

e) einer Stellschraube (15), mit der der Kolbenhub einstellbar ist;

dadurch **gekennzeichnet,** daß der Kolben (11) einen Hohlraum aufweist, der mit einer Nut (5) in Verbindung steht, die in dem Außenmantel des Kolbens (11) ausgestaltet ist.

2. Vorrichtung nach Anspruch 1,
dadurch **gekennzeichnet,** daß sich auf dem Kolben (11) ein Hebel (14) aufstützt, der auf einer Drehachse (16) gelagert ist, und dessen eines Ende im Bewegungsweg des Rads (2) liegt.

3. Vorrichtung nach Anspruch 1 oder 2,
dadurch **gekennzeichnet,** daß sowohl das Saugventil (9) als auch das Druckventil (10) ein Kugelventil ist.

4. Vorrichtung nach einem der vorhergehenden Ansprüche,
dadurch **gekennzeichnet,** daß eine Pfanne (19) zur Aufnahme des von der Schmierstelle abfallenden oder abfließenden Schmiermittels enthalten ist.

## Claims

1. Lubricating apparatus for elements being movable in relation to each other e.g. a rail (**1**) and a wheel(**2**),

a.) by means of the cylinder (**12**) of a pump, containing a piston (**11**) provided with a returning spring (**17**);

b.) by means of a sucking valve (**9**) and a compression valve (**10**);

c.) furtheron having a suction duct (**6**) having been connected to a tank containing the lubricants;

d.) by means of a compression duct (**7**) which is led through a bore (**8**) in the rail (**1**) to the surface subjected primarily to abrasion and wear;

e.) there is an adjusting screw (**15**) provided for, by the aid of which piston stroke can be adjusted;

**characterized** in that in the piston (**11**) there is a cavity having been connected to a groove (**5**), while said groove (**5**) was formed in the external jacket of the piston (**11**).

2. Apparatus as claimed in claim 1.
**characterized** in that a lever (**14**) is bearing up against the piston (**11**), the lever (**14**) is supported in bearings on a rotary shaft (**16**) and one of the ends of the lever (**14**) is arranged in the path of the motion of the wheel (**2**).

3. Apparatus as claimed in claim 1. or 2.,
**characterized** in that both the suction valve (**9**) and the compression valve (**10**) are ball-valves.

4. Apparatus as claimed in one of the preceding claims,
**characterized** by a pan for collecting lubricant falling or flowing from the lubrication point.

## Revendications

1. Dispositif pour graissage d'éléments mobils l'un contre l'autre, p.ex. d'un rail /1/ et d'une roue /2/, avec

a./ un cylindre de pompe (12) qui renferme un piston (11) avec un ressort de rappel (17);

b./ soupape d'aspiration (9) et une soupape à pression (10);

c./ un conduit d'aspiration (6), qui est raccordé à un réservoir de graisse;

d./ un conduit à pression qui conduit à la surface exposée le plus souvent à l'usure à travers un forage dans le rail;

e./ une vis de réglage avec laquelle on peut régler la course de piston;

caractérisé de cette façon que le piston (11) présente une cavité se reliant à une rainure (5) qui est formée dans le manteau extérieur du piston (11);

2. Dispositif suivant l'exigence 1,
caractérisé de cette façon, que sur le piston est appuyé un levier qui est logé sur un axe de rotation et un des bouts de celui-ci se trouve sur la voie de mouvement de la roue.

3. Dispositif suivant l'exigence 1 ou 2, caractérisé de cette façon que tant la soupape d'aspiration (9) que la soupape de pression (10) est une soupape à boule.

4. Dispositif suivant l'un des exigences précédentes, caractérisé de cette façon qu'une réservoir est renfermée pour recueillir la matière de graissage tombant ou s'écoulant de la place de graissage.

EP 0 323 495 B1

Fig. 1.

Fig. 2